**Europäisches Patentamt**

**European Patent Office**

**Office européen des brevets**

(19)

(11) Veröffentlichungsnummer: **0 246 346 B1**

(12) # EUROPÄISCHE PATENTSCHRIFT

(45) Veröffentlichungstag der Patentschrift: **02.01.92**

(51) Int. Cl.⁵: **A01C 23/02**

(21) Anmeldenummer: **86106946.6**

(22) Anmeldetag: **22.05.86**

(54) **Injektionsvorrichtung zur kontinuierlichen Einbringung von pumpfähigem Flüssigdünger u. dgl. in den Boden.**

(43) Veröffentlichungstag der Anmeldung:
**25.11.87 Patentblatt 87/48**

(45) Bekanntmachung des Hinweises auf die
Patenterteilung:
**02.01.92 Patentblatt 92/01**

(84) Benannte Vertragsstaaten:
**AT BE CH DE FR GB IT LI NL SE**

(56) Entgegenhaltungen:
**DE-A- 2 011 977**
**FR-A- 843 895**
**FR-A- 1 464 880**
**NL-A- 260 375**
**NL-A- 7 514 909**

(73) Patentinhaber: **De Dissel Beheer B.V.**
**Dinxperlosestraatweg 88**
**NL-7122 AA Aalten(NL)**

(72) Erfinder: **Ansink, Jan Christian**
**Dinxperlosestraatweg 43 Ijzerlo**
**NL-7120 AA Aalten(NL)**

(74) Vertreter: **Schulze Horn, Stefan, Dipl.-Ing.**
**M.Sc.**
**Goldstrasse 36**
**W-4400 Münster(DE)**

# Beschreibung

Die Erfindung betrifft eine Injektionsvorrichtung nach dem Oberbegriff des Patentanspruches 1.

Aus der Druckschrift NL-A-260 375 ist eine Injektionsvorrichtung mit den im Oberbegriff des Patentanspruches 1 genannten Merkmalen bekannt. Bei dieser bekannten Injektionsvorrichtung ist der Vorratstank für die in den Boden einzubringende Flüssigkeit oberhalb der Dosierschleusen angeordnet und mit letzteren mittels je einer Verbindungsleitung verbunden. Die Dosierschleusen sind dabei bevorzugt mit je einer um eine vertikale Achse verdrehbaren Dosier- und Verteilscheibe mit wenigstens einer Durchbrechung versehen, wobei der Antrieb der Scheibe über ein Kegelradgetriebe und einen Kettentrieb von Laufrädern aus erfolgt. Vom Auslaß jeder Dosierschleuse führt ein Schlauch zum oberen Ende des zugehörigen Injektionskörpers, um diesem die vorgesehene Flüssigkeitsmenge zuzuführen.

Als nachteilig wird bei dieser bekannten Injektionsvorrichtung angesehen, daß sie nur für dünnflüssige, keine Feststoffe enthaltende Flüssigkeiten geeignet ist, nicht aber für natürlichen Flüssigdünger, wie Flüssigmist oder Gülle, da diese immer auch einen gewissen Anteil von Feststoffen, z.B. faserige pflanzliche Futterreste, enthalten. Derartige Feststoffe können bei der bekannten Vorrichtung, die ja auch ausdrücklich für die Ausbringung von Insektiziden gedacht ist, leicht zu Verstopfungen der die Flüssigkeit führenden Leitungen und dadurch zu Verfälschungen der Dosierung und sonstigen Funktionsstörungen führen. Außerdem sind die Dosierschleusen und insbesondere ihr Antrieb relativ kompliziert und dadurch im Betrieb störanfällig sowie in der Herstellung und bei Reparaturen relativ teuer.

Es stellt sich daher die Aufgabe, eine Injektionsvorrichtung der eingangs genannten Art zu schaffen, die die aufgeführten Nachteile vermeidet und die insbesondere störungsunanfällig und langlebig ist, die eine exakte und gleichmäßige Austragsmenge auch bei feststoffhaltigen Flüssigkeiten gewährleistet und die technisch einfach und damit kostengünstig und wartungs- und reparaturfreundlich ist.

Die Lösung dieser Aufgabe gelingt erfindungsgemäß durch eine Injektionsvorrichtung der eingangs genannten Art mit den kennzeichnenden Merkmalen des Patentanspruches 1.

Durch den Einsatz der wegabhängig betätigten Zellenradschleusen wird von der Vorrichtung eine konstante Flüssigkeitsmenge je zurückgelegter Wegstreckeneinheit ausgetragen. Bei einem Stillstand der Vorrichtung stehen auch die Zellenradschleusen still, so daß - abgesehen von geringsten Leckmengen - keine Flüssigkeit ausgetragen wird.

Bei einer Auslegung der Zellenradschleusen mit relativ großen Zellen und einer niedrigen Arbeitsdrehzahl unterliegen die Schleusen einem sehr geringen Verschleiß. Aufgrund der bei dieser Schleuse möglichen großen Querschnitte der Fließwege treten Störungen durch mitgeschwemmte Feststoffe kaum auf, da diese ohne weiteres mitgefördert und ausgetragen werden. Die erforderliche Antriebsleistung für die Zellenradschleusen ist sehr gering, da die Flüssigkeit unter Schwerkrafteinfluß vom oben gelegenen Einlauf durch die Schleuse zum untenliegenden Auslauf gelangt. Zur Vermeidung von Dosierungsunterschieden zwischen den einzelnen Injektionskörpern ist je eine Zellenradschleuse pro Injektionskörper vorgesehen. Damit wird weiterhin erreicht, daß nach der Dosierung die Flüssigkeit bis zum Austritt aus den Injektionskörpern in allen Fällen den gleichen Weg zurückzulegen hat, so daß sich jeweils gleiche Strömungswiderstände ergeben.

Die die einzelnen Zellenradschleusen versorgende gemeinsame Verteilerkammer weist im Vergleich zu der Dosierschleuse der bekannten Injektionsvorrichtung einen großen Querschnitt auf, der kein Hindernis für in der Flüssigkeit transportierte Feststoffe darstellt. Durch die Anordnung der Schleusen unmittelbar unterhalb der Verteilerkammer wird auch für die Verteilung der Flüssigkeit die Schwerkraft ausgenutzt und es werden große Strömungsquerschnitte erreicht. Lediglich für die Förderung der Flüssigkeit aus dem Vorratstank, d. h. im allgemeinen dem Tank eines Tankfahrzeuges, ist eine Förderpumpe erforderlich, die aber üblicherweise ohnehin an Tankfahrzeugen vorhanden ist. Zur Beschleunigung der Flüssigkeit bei dickflüssiger Konsistenz kann die Beaufschlagung der Verteilerkammer mit einem geringen Überdruck von bis zu 1 bar über dem atmosphärischem Luftdruck nützlich sein. Um Luft, die z. B. im Gegenstrom zur Flüssigkeit durch die Zellenradschleusen in die Verteilerkammer gelangen kann, aus der Kammer zu entlassen, ist die erwähnte selbsttätige Entlüftungseinrichtung vorgesehen. Dabei wird vorzugsweise an jedem Ende der Kammer eine solche Einrichtung angeordnet, um eine sichere Entlüfung auch bei einer Schräglage der Vorrichtung zu gewährleisten.

Da mehrere Injektionskörper nebeneinander in der Vorrichtung angeordnet sind, ist es konstruktiv vorteilhaft, die Zellenradschleusen auf einer gemeinsamen Antriebsachse anzuordnen. Um dennoch auch die Möglichkeit des Ausbaues oder Wechsels einer einzelnen Zellenradschleuse zu gewährleisten, besteht die Antriebsachse vorteilhaft aus mehreren, lösbar miteinander verbundenen, jeweils einer Schleuse zugeordneten Achsteilstücken.

Eine alternative Möglichkeit besteht darin, daß jede Zellenradschleuse über eine eigene Antriebsachse und damit über einen eigenen Antrieb verfügt.

Um eine genaue Wegabhängigkeit der Austragsmenge sicherzustellen, sind die Zellenradschleusen vorteilhaft durch ein oder mehrere, von wenigstens einer Achse getragene, auf der Bodenoberfläche ablaufende Räder in Drehung versetzbar, wie dies an sich bereits aus der eingangs genannten Druckschrift bekannt ist. Hierdurch wird eine bestimmte zurückgelegte Wegstrecke in eine definierte Zahl von Umdrehungen des Zellenrades der Schleuse und damit in eine definierte Austragsmenge umgesetzt.

Ein besonders einfacher und robuster und damit auch kostengünstiger Antrieb der Zellenradschleusen wird dadurch erreicht, daß endseitig auf der gemeinsamen Antriebsachse der Schleusen je eines der Räder angeordnet ist, wobei wenigstens eines der Räder kraftschlüssig mit der Achse verbunden ist. Weiterhin vorteilhaft ist hierbei, daß das Verhältnis von Fördermenge zu Wegstrecke fest eingestellt ist und nicht manipulierbar ist. Ein weiterer Vorteil besteht darin, daß ein Blockieren einer Zellenradschleuse - falls dies einmal eintritt - sofort an einem Stillstand des mit der Achse kraftschlüssig verbundenen Rades sichtbar wird. Das Rad wirkt dabei zusammen mit dem Boden, auf dem es abrollt bzw. über den es stillstehend gleitet, als Rutschkupplung, was ernste Schäden an den Zellenradschleusen verhindert.

Ein anderes Antriebskonzept, das etwas aufwendiger ist, aber dafür eine Dosierungsvariation erlaubt, besteht darin, daß die Schleusenantriebsachse(n) über ein oder mehrere Kettengetriebe, jeweils bestehend aus zwei oder mehreren Kettenritzeln und einer über diese geführte Kette, von einem oder mehreren Rädern aus antreibbar sind. Durch die Kraftübertragung per Kettenritzel und Kette kann ein gewünschtes Übersetzungsverhältnis zwischen Radumdrehungen und Zellenradumdrehungen eingestellt werden. Bei Anordnung mehrerer abgestufter Ritzel können diese Übersetzungen auch nachträglich noch verändert werden, um die Austragsmenge z. B. an unterschiedliche Böden anzupassen. Im Vergleich zu bekannten Antrieben derartiger Vorrichtungen ist auch dieser Antrieb noch sehr einfach und kostengünstig und zugleich wirkungsvoll und robust.

Bei der zuletzt beschriebenen Ausführung der Injektionsvorrichtung kann ergänzend vorgesehen sein, daß die Radachse(n) mit ihren Rädern mittels wenigstens je einer Schwinge um die Schleusen-Antriebsachse(n) herum verschwenkbar ist/sind. Hierdurch kann z. B. durch Anordnung einer Kolben-Zylinder-Einheit bei Versorgung durch eine vorhandene Traktor-Hydraulik, die Absenktiefe der Injektionskörper innerhalb vorgegebener Grenzen variiert werden, da das Rad weiterhin auf der Bodenoberfläche läuft. Zugleich behält die Antriebskette aber unabhängig von der Verschwenkungsstellung ihre einmal eingestellte Spannung. Außerdem können hierdurch die Injektionskörper völlig aus dem Boden herausgehoben werden, um z. B. die Vorrichtung außerhalb von Gülleausbringungsflächen zu verfahren. Alternativ besteht die Möglichkeit, dieSchwinge unter Federbelastung stets mit einer definierten Kraft zu beaufschlagen, um das Rad konstant an die Bodenoberfläche anzudrücken.

Eine bevorzugte Anbauweise der erfindungsgemäßen Vorrichtung wird realisiert durch zu einer Traktor-Dreipunkt-Aufhängung kompatible Anschlaglaschen, einen zu einer Kupplung eines Tankanhängers passenden Kupplungszapfen und eine wenigstens endseitig in der Vorrichtung gelagerte, in ihrer Länge im wesentlichen dem Abstand zwischen dem Kupplungszapfen der Vorrichtung und einem entsprechenden Kupplungszapfen des Traktors entsprechende, in Längsrichtung etwa mittig durch die Vorrichtung hindurchgeführte Zapfwelle. Hierdurch wird ermöglicht, daß die Injektionsvorrichtung zwischen einen Traktor und einen Tankanhänger gesetzt werden kann, wobei sich aufgrund der erreichbaren kompakten Bauweise der erfindungsgemäßen Vorrichtung die Gesamtlänge des Gespannes nur unwesentlich vergrößert. Der Pumpenantrieb des Tankanhängers kann dabei dank der durch die Vorrichtung geführten Zapfwelle wie üblich vom Traktor aus erfolgen. Andererseits kann auch ein Traktor die Injektionsvorrichtung ziehen und ein Tankfahrzeug parallel fahren bzw. gezogen werden. Bei dieser Anbringungsweise kann ein Heben und Senken der Vorrichtung mittels der beim Traktor vorhandenen Mechanik seiner Dreipunktaufhängung erfolgen. Die Absenkung der Vorrichtung während des Ausbringens von Flüssigdünger wird dabei zweckmäßig so eingestellt, daß die Räder der Vorrichtung ausreichend belastet und die Hinterräder des Traktors nicht zu sehr entlastet sind. Neben dieser Anbringung an der Dreipunktaufhängung kann die Vorrichtung auch als Anhänger ausgeführt sein, wofür insbesondere die oben beschriebene Ausführung der Vorrichtung mit Schwenkachse(n) bzw. heb- und senkbaren Injektionskörpern geeignet ist.

Zur Vermeidung von Funktionsstörungen der Zellenradschleusen durch in der Flüssigkeit befindliche Feststoffe, z. B. Silagereste in Gülle, ist vorgesehen, daß die äußeren Enden der die Zellen der Zellenradschleusen bildenden Flügel einerseits und die Umrandungen der Einläufe und der Ausläufe andererseits als miteinanderwirkende Schneidkanten ausgebildet sind. An diesen Schneidkanten werden die mitgeschwemmten Feststoffe, vor allem Pflanzenreste, nach Art einer Schere zerschnitten und so für die Schleuse durchgängig gemacht.

Da während des Betriebes der Zellenradschleusen bei dem oben beschriebenen Schneidvorgang lediglich die Schneidkanten in dem Teil der Öffnungen beansprucht werden, auf die die Enden der Zellenradflügel bei ihrer Drehung zulaufen, kommt es hier mit der Zeit zu einem höheren Verschleiß als an den gegenüberliegenden Öffnungskanten. Außerdem wird von den beiden an dem Schneidvorgang beteiligten Öffnungskanten im wesentlichen die einlaufseitige Kante beansprucht, da dort das noch unzerkleinerte Feststoffmaterial ankommt. Um dennoch eine möglichst lange Standzeit der Zellenradschleusen ohne Erneuerung von einzelnen Teilen zu erzielen, weisen die Zellenradschleusen mit Vorteil jeweils ein Gehäuse auf, in welchem der Einlauf und der Auslauf in sich und untereinander spiegelsymmetrische Öffnungen sind, und welches zwei in sich und untereinander spiegelsymmetrische Flanschflächen zur Anordnung des Gehäuses zwischen der Verteilerkammer und dem Injektionskörper sowie Mittel zur lösbaren Verbindung mit diesen aufweist. Hierdurch kann das Gehäuse durch jeweils eine 180˚-Drehung um seine Vertikalachse und/oder seine Horizontalachse in vier verschiedenen Lagen eingebaut werden, so daß alle Schneidkanten der Gehäuseöffnungen bei längerem Betrieb gleichmäßig beansprucht werden.

Um eine möglichst zügige und vollständige Füllung der Schleusenkammern während des Betriebes auch bei höheren Arbeitsdrehzahlen der Schleuse zu gewährleisten, weist die Vorrichtung wenigstens je einen in den Zellenradschleusen vorhandenen Luft-Überströmkanal auf, welcher derart in das Innere des Schleusengehäuses mündet, daß der Kanal während des Füllens einer Schleusenzelle zumindest zeitweise eine luftdurchlässige Strömungsverbindung zwischen der zu füllenden Zelle und der nächstfolgenden, entleerten Zelle bildet.

Im folgenden werden bevorzugte Ausführungsbeispiele der Erfindung anhand einer Zeichnung näher erläutert. Es zeigen im einzelnen:

Figur 1     eine Injektionsvorrichtung gemäß Erfindung in Rückansicht, teils in Durchsicht,

Figur 2     die Injektionsvorrichtung aus Figur 1 in Seitenansicht, teils in Durchsicht und in aufgeschnittener Darstellung,

Figur 3     die Injektionsvorrichtung in einer zweiten, vereinfachten Ausführung, in Seitenansicht, teils in Durchsicht,

Figur 4     die Injektionsvorrichtung in einer dritten Ausführungsform mit Einzelantrieb der Schleusen, in Seitenansicht, teils in Durchsicht,

Figur 5     eine Zellenradschleuse als Teil der Vorrichtung im Vertikalschnitt und

Figur 6     die Zellenradschleuse aus Figur 5 in Aufsicht auf ihre Einlaufseite.

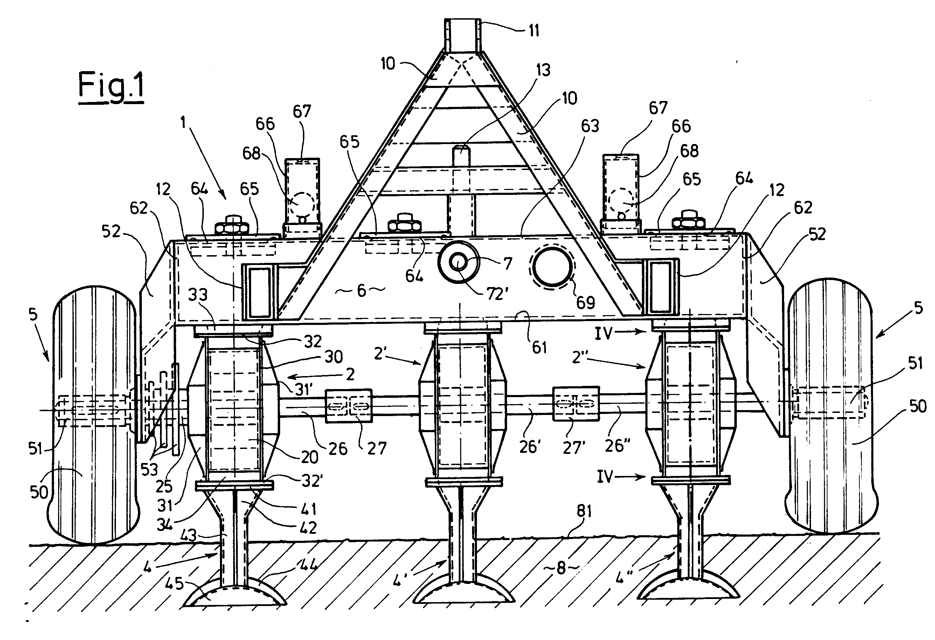

Wie aus der Figur 1 zu entnehmen ist, besteht das dargestellte Ausführungsbeispiel der Injektionsvorrichtung 1 im wesentlichen aus einem dreieckförmigen Rahmen 10, einer quer zu diesem verlaufenden Verteilerkammer 6, drei unterhalb der Kammer 6 angeordneten Zellenradschleusen 2, 2′ und 2″ mit jeweils einem an ihrer Unterseite angeordneten, in den Boden 8 hineinragenden Injektionskörper 4, 4′ und 4″ sowie zwei die Vorrichtung 1 tragenden Rädern 5.

Der Rahmen 10 hat die Form eines auf seiner Basis stehenden Dreiecks, an dessen Ecken Anschlaglaschen 11 bzw. 12 zur Verbindung der Vorrichtung 1 mit einer Dreipunkt-Aufhängung eines Traktors angeordnet sind. Etwa in der Mitte des Rahmens 10 ist ein Kupplungszapfen 13 zur Aufnahme der Kupplung eines Tankanhängers angebracht.

In seinem unteren Teil ist der Rahmen 10 mit der als tragendes Teil ausgebildeten, querlaufenden Verteilerkammer 6 verbunden. Die Verteilerkammer 6 besteht aus einem Boden 61, Seitenwänden 62 und einer Deckwandung 63, so daß sich ein quaderförmiger Hohlkörper ergibt. In der Deckwandung 63 sind mehrere, im Ausführungsbeispiels drei Wartungs- und Kontrollöffnungen 64 ausgeschnitten, die im Normalzustand mit Deckeln 65, die für die genannten Zwecke geöffnet werden können, dicht verschlossen sind. Weiterhin sind auf der Deckwandung 63 der Kammer 6 zwei Entlüftungseinrichtungen angebracht. Diese bestehen jeweils aus einem zylinderförmigen Rohrstück 66, dessen oberes Ende unter Freilassung einer Entlüftungsbohrung 67 verschlossen ist. Im Inneren des Rohrstückes 66 ist mit begrenztem vertikalem Bewegungsspielraum eine Schwimmerkugel 68 angeordnet, die bei ansteigendem Flüssigkeitsspiegel die Entlüftungsbohrung 67 dicht verschließt.

An die Seitenwandungen ist links und rechts von der Kammer 6 außenseitig je eine Radaufhängung 52 angebracht, an deren unterem Ende jeweils eines der Räder 5 gelagert ist. Die Räder 5 sind jeweils auf Achsen 51 aufgesetzt und rollen mit Gummireifen 50 auf der Bodenoberfläche 81 ab.

Weiterhin besitzt die Kammer 6 einen Anschlußstutzen 69, an welchen ein Schlauch von einem Flüssigdüngertank kommend anschließbar ist, und durch welchen der Flüssigdünger von dem Tank in die Verteilerkammer 6 gelangt. Durch die Vorrichtung 1, genauer die Kammer 6, ist in Bewegungsrichtung der Vorrichtung 1 verlaufend eine Zapfwelle 7 geführt, deren eines Anschlußende 72′ nach rückwärts aus der Kammer 6 vorragt. An diese Zapfwelle 7 kann beispielsweise ein Zapfwellenanschluß eines Pumpenantriebes des bereits erwähnten Tankanhängers angeschlossen werden.

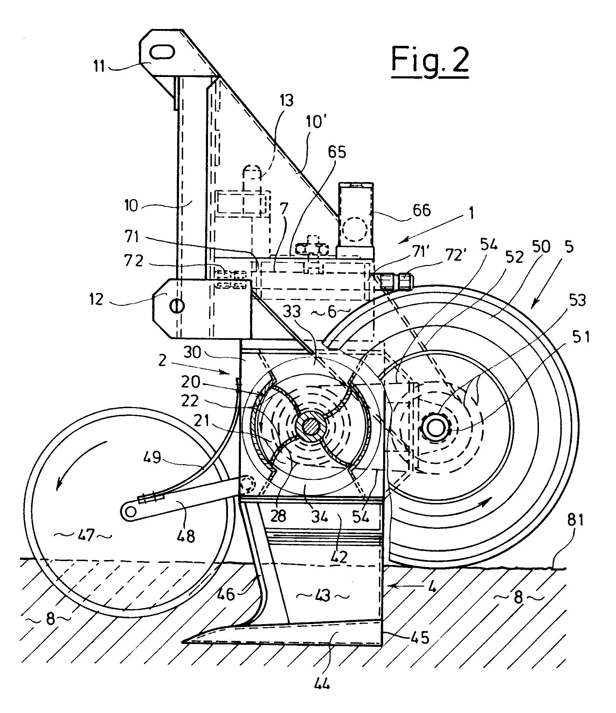

An die Unterseite des Bodens 61 der Kammer 6 sind die drei Zellenradschleusen 2, 2' und 2″ mit Flanschflächen 32 angeflanscht. Da die Zellenradschleusen untereinander identisch ausgeführt sind, erfolgt deren Beschreibung beispielhaft anhand der in der Figur 1 links angeordneten Schleuse 2. Die Zellenradschleuse 2 besteht aus einem Zellenrad 20, das von einem Schleusengehäuse 30 umgeben ist. Das Gehäuse 30 weist an seiner Oberseite die bereits erwähnte Flanschfläche 32 sowie an seiner Unterseite eine spiegelsymmetrische Flanschfläche 32' auf. Kammerseitig ist in Verbindung mit einer Öffnung im Kammerboden 61 in der Schleuse 2 ein Einlauf 33 ausgebildet; entsprechend ist an der Unterseite der Schleuse 2 ein symmetrischer Auslauf 34 vorhanden. Zu den Seiten hin ist das Gehäuse 30 durch zwei Deckel 31 und 31' verschlossen. Angetrieben wird das Zellenrad 20 der Schleuse 2 durch eine Antriebsachse 25, die aus Achsteilstücken 26, 26' und 26″ zusammengesetzt ist, welche lösbar miteinander über Kupplungen 27 und 27' verbunden und jeweils einer der Schleusen 2, 2' und 2″ zugeordnet sind. Bei der Schleuse 2 ist das zugehörige Achsteilstück 26 beidseitig durch die Gehäusedeckel 31 und 31' des Schleusengehäuses 30 dichtend durchgeführt und kraftschlüssig mit dem Zellenrad 20 verbunden. Bei dem in der Figur 1 dargestellten Ausführungsbeispiel der Vorrichtung erfolgt der Antrieb der Welle 25 bzw. der diese bildenden Wellenteilstücke 26, 26' und 26″ mittels eines Kettengetriebes. Dieses besteht aus drei Kettenritzeln 53, die auf der Achse 51 des linken Rades 5 angebracht sind, sowie aus drei entgegengesetzt gestuften Kettenritzeln (in der Figur nicht sichtbar), die auf der Schleusenantriebsachse 25 in Flucht zu den Ritzeln 53 angeordnet sind, und einer über eines der Ritzelpaare laufenden Kette. Die Gestaltung dieses Antriebs wird anhand der Figur 2 noch genauer beschrieben.

An den unterseitigen Flansch 32' ist der bereits erwähnte Injektionskörper 4 mit einem passenden Gegenflansch 41 angebaut. Der Injektionskörper 4 weist ein sich nach unten hin verjüngendes Kopfstück 42, einen sich daran anschließenden schmalen Schwertteil 43 sowie einen flachen, im Querschnitt etwa linsenförmigen Fußteil 44 auf. Der Fußteil 44 ist in Bewegungsrichtung der Vorrichtung 1 gesehen nach hinten offen, so daß der von der Schleuse 2 kommende Flüssigdünger lediglich durch Schwerkraftwirkung nach hinten in den durch den Schwertteil 43 und den Fußteil 44 innerhalb des Bodens gebildeten Spaltraum eintreten kann.

Figur 2 zeigt die Injektionsvorrichtung 1 aus Figur 1 in Seitensicht, wobei die Bewegungsrichtung der Vorrichtung 1 in der Darstellung von rechts nach links verläuft. Den oberen Teil der Vorrichtung 1 bildet wieder der Rahmen 10 mit einer in dieser Ansicht sichtbaren Seitenverstärkung 10' und den Anschlaglaschen 11 und 12 für die Dreipunktaufhängung. Weiterhin ist der Kupplungszapfen 13 sichtbar, der über entsprechende Verbindungsteile sowie mit dem Rahmen 10 als auch mit der unterhalb des Kupplungszapfens 13 angeordneten Verteilerkammer 6 fest verbunden ist. Die Verteilerkammer 6 ist in dieser Seitenansicht der Vorrichtung 1 in Stirnansicht sichtbar, wobei der rechteckige Querschnitt der Kammer 6 deutlich wird. An der Oberseite der Kammer 6 ist einer der Deckel 65 sowie eines der Entlüftungsrohre 66 erkennbar. Durch den oberen Teil der Kammer 6 verläuft in Bewegungsrichtung der Vorrichtung 1 die Zapfwelle 7, die an ihren Enden in Lagern 71 und 71' drehbar gelagert ist. Mit ihren Anschlußenden 72 und 72' ragt die Zapfwelle über die Verteilerkammer 6 frei hinaus, um einen Anschluß an die Zapfwelle eines Traktors am Ende 72 bzw. einer Zapfwelle eines Tankanhängers am Ende 72' zu ermöglichen. An die Verteilerkammer 6 angesetzt ist die schräg nach hinten und unten verlaufende Radaufhängung 52, in deren unterem Ende die Radachse 51 mit dem Rad 5 gelagert ist. Mit seinem Reifen 50 rollt das Rad 5 auf der Oberfläche 81 des Bodens 8 ab. Auf der Achse 51 sind die drei Kettenritzel 53 angeordnet und kraftschlüssig mit dem Rad 5 verbunden.

Nach unten schließt sich an die Kammer 6 das Gehäuse 30 der Zellenradschleuse 2 an. Im Inneren des Gehäuses 30 ist das Zellenrad 20 zu erkennen, das im dargestellten Ausführungsbeispiel vier Flügel 22 aufweist. Die Flügel 22 sind in Rotationsrichtung des Zellenrades 20 gesehen an ihren Enden nach vorn gebogen und bilden zwischen sich vier Zellen 21, 21', 21″ und 21‴ jeweils gleichen Volumens. Bei Rotation des Zellenrades 20 gelangt Flüssigdünger aus der Kammer 6 durch den Einlauf 33 in eine der Zellen 21 - 21‴, wird in dieser weiterbefördert und gelangt durch den Auslauf 34 aus der Zelle in den Injektionskörper 4, der unterhalb der Zellenradschleuse 2 angeordnet ist. Der Antrieb des Zellenrades 20 erfolgt hier über eine Kette 54, die von einem der Ritzel 53 auf der Radachse 51 zu einem von mehreren Ritzeln 28 auf der Antriebsachse 25 verläuft. Durch Versetzen der Kette 54 auf ein anderes Ritzelpaar läßt sich eine geänderte Übersetzung zwischen der Radumdrehungszahl und der Zellenradumdrehungszahl einstellen.

Von dem unterhalb der Zellenradschleuse 2 angeordneten Injektionskörper 4 ist auch in dieser Figur das Kopfstück 42, der Schwertteil 43 und der Fußteil 44 erkennbar. Die Vorderkante von Kopfstück 42 und Schwertteil 43 ist als Bodenschneidkante 46, vorzugsweise aus gehärtetem Stahl, ausgebildet. Der Fußteil 44 hat eine flache, nach vorn spitz zulaufende Form mit einer glatten Unterseite und läuft nach hinten in den Abgabeöffnung 45 aus. Durch diese Öffnung 45 gelangt der durch den Auslauf 34 in den Injektionskörper 4 gelangte Flüssigdünger in den Boden 8, wo er sich innerhalb des durch das Hindurchbewegen des Injektionskörpers 4 geschaffenen Hohlraumes verteilt. Zur Erleichterung der Bewegung des Injektionskörpers 4 durch den Boden 8 ist unmittelbar vor der Bodenschneidkante 46 des Körpers 4 ein Vorschneidrad 47 in Form einer flachen, scharfkantigen Scheibe angeordnet. Diese Scheibe 47 ist um ihren Mittelpunkt drehbar an einem Schwenkarm 48 gelagert, dessen anderes Ende am Gehäuse 30 der Zellenradschleuse ebenfalls gelenkig gelagert ist. Mittels einer Andruckfeder 49 wird der Schwenkarm 48 und damit das Vorschneidrad 47 mit einer vorgegebenen Kraft in den Boden 8 eingedrückt, so daß in diesen kontinuierlich ein vertikaler Schnitt eingebracht wird.

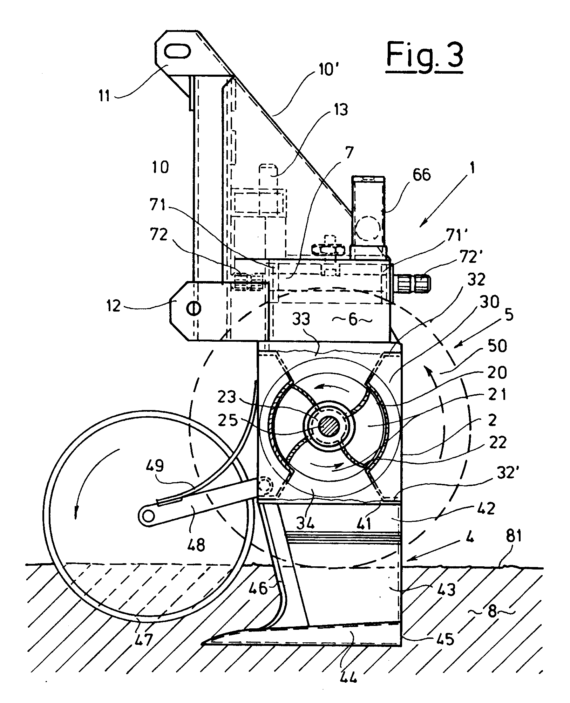

Figur 3 zeigt eine Ausführungsform der Injektionsvorrichtung 1, die in weiten Teilen mit der Ausführung gemäß den Figuren 1 und 2 identisch ist. Der Unterschied zwischen den beiden Ausführungen besteht in der Anordnung der Räder 5 sowie in der Art des Antriebes der Zellenradschleusen 2, 2' und 2". In der in Figur 3 dargestellten Seitenansicht ist eines der Räder 5 sowie die Zellenradschleuse 2 erkennbar. In dieser Ausführung der Vorrichtung 1 ist das Rad 5 unmittelbar auf der Antriebsachse 25 der Zellenradschleuse 2 angeordnet und mit dieser Achse 25 kraftschlüssig verbunden. Hierdurch wird ein technisch sehr einfacher Direktantrieb der Zellenradschleusen erreicht, der kostengünstig und robust ist. Bei dieser Vorrichtung entspricht demnach eine Radumdrehung genau einer Zellenradumdrehung, so daß auf einer Strecke, die dem Umfang des Rades 5 entspricht, genau viermal das Volumen ausgebracht wird, das in eine Zelle des Zellenrades 20 hineinpaßt. Bei entsprechender Wahl des Raddurchmessers sowie des Zellenvolumens kann eine bestimmte Austragsmenge pro Flächeneinheit festgelegt werden.

Da bei dieser Ausführung der Vorrichtung 1 das Rad 5 unmittelbar auf der Zellenrad-Antriebsachse 25 sitzt, entfällt hier die Radaufhängung 52. In seinen übrigen Teilen entspricht das in Figur 3 dargestellte Ausführungsbeispiel der Vorrichtung 1 genau dem Ausführungsbeispiel in Figur 2. Zur Bedeutung der einzelnen Bezugsziffern in Figur 3 wird auf die Beschreibung zu Figur 2 verwiesen. Wie aus der Figur 3 ersichtlich ist, ergibt sich neben einer vereinfachten Bauweise auch eine noch größere Kompaktheit der Injektionsvorrichtung 1, was deren Einbau zwischen einem Traktor und einem Tankanhänger vereinfacht.

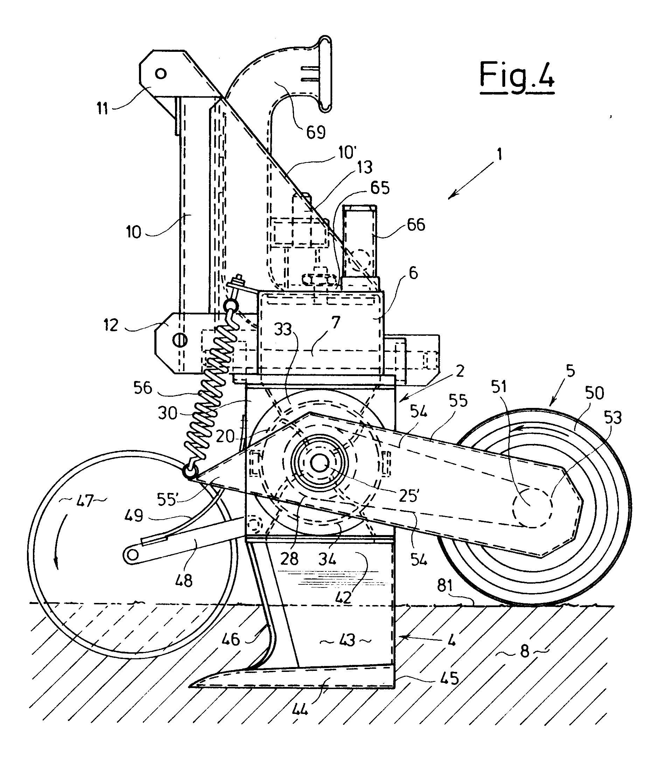

Das in Figur 4 dargestellte dritte Ausführungsbeispiel der Erfindung entspricht im wesentlichen dem in Figur 2 dargestellten Beispiel, wobei Unterschiede hinsichtlich der Art des Antriebes der Zellenradschleuse 2 sowie bei der Ausführung des Anschlußstutzens 69 zur Zuführung des Flüssigdüngers bestehen.

Der Antrieb der Zellenradschleusen, im Beispiel in Figur 4 ist die Zellenradschleuse 2 sichtbar, erfolgt hier für jede Zellenradschleuse gesondert über jeweils ein nachlaufendes Rad 5. Das Rad 5 ist am Ende einer Schwinge 55 auf einer Achse 51 drehbar gelagert und rollt mit seinem Reifen 50 auf der Oberfläche 81 des Bodens 8 ab. Die Schwinge 55 ist un die Achse 25' der Zellenradschleuse 2 auf- und abwärts verschwenkbar. Am radabgewandten Ende 55' der Schwinge 55 greift eine Zugfeder 56 an, deren anderes Ende am Rahmen 10 der Vorrichtung 1 festgelegt ist. Entsprechend der Spannung der Feder 56, im dargestellten Beispiel eine Schraubenfeder, wird das Rad 5 mit einer definierten Anpreßkraft auf die Bodenoberfläche 81 gedrückt.

Der Antrieb der Zellenradschleuse 2 erfolgt auch hier, wie beim Ausführungsbeispiel nach Figur 2 über ein Kettengetriebe. Hierzu ist auf der Achse 51 des Rades 5 wieder ein Kettenritzel 53 angeordnet, das sich mit dem Rad 5 dreht und über das eine Kette 54 zum Ritzel 28 auf der Antriebswelle 25' der Zellenradschleuse 2 bzw. des zugehörigen Zellenrades 20 verläuft.

Da das Rad 5 bei dieser Ausführung der Injektionsvorrichtung 1 unmittelbar hinter der Zellenradschleuse 2 und damit auch hinter dem Injektionskörper 4 über die Bodenoberfläche 81 läuft, verschließt das Rad 5 gleichzeitig auch den von dem Vorschneidrad 47 und dem Injektionskörper 4 in den Boden eingebrachten Schnitt. Ein zusätzlicher, nachlaufender Walzenkörper ist damit nicht erforderlich.

Da jeweils eine Zellenradschleuse 2, ein Injektionskörper 4, ein Vorschneidrad 47 und ein Antriebsrad 5 mit Schwinge 55 eine Einheit bilden, kann diese nach Lösen der Zellenradschleuse 2 von der Verteilerkammer 6 leicht ausgetauscht oder versetzt werden. Hierzu kann vorgesehen sein, daß die Verteilerkammer 6 in ihrem Boden eine größere Anzahl von Öffnungen aufweist, als Zellenradschleusen vorhanden sind. Die nicht benötigten Öffnungen können dabei durch flüssigkeitsdichte Deckel verschlossen werden. Je nach Reihenabstand der z.B. mit Flüssigdünger zu beschickenden Pflanzenkulturen können so die genannten Einheiten zur Einstellung des entsprechenden Pflanzreihenabstandes in passender Weise an die richtige Öffnung der Verteilerkammer 6 angeflanscht werden, während die übrigen Öffnungen verschlossen werden. Somit ist die Injektionsvorrichtung 1 sehr variabel einsetzbar und auf einfache Art und Weise an unterschiedliche Anwendungsfälle anpaßbar.

Der Anschlußstutzen 69 ist in diesem Ausführungsbeispiel gemäß Figur 4 nicht unmittelbar an der Verteilerkammer 6 angeordnet, sondern als Rohrstück von dieser nach oben geführt, um etwa oberhalb des Kupplungszapfens 13 zu enden. Diese Anordnung bietet den Vorteil, daß ein Schlauch, der die Verbindung zu einem Tankwagen herstellt, in nur geringen Umfang mechanisch beansprucht wird, so daß auch für die Verbindung zwischen Tankwagen und Vorrichtung 1 eine hohe Betriebssicherheit sichergestellt wird.

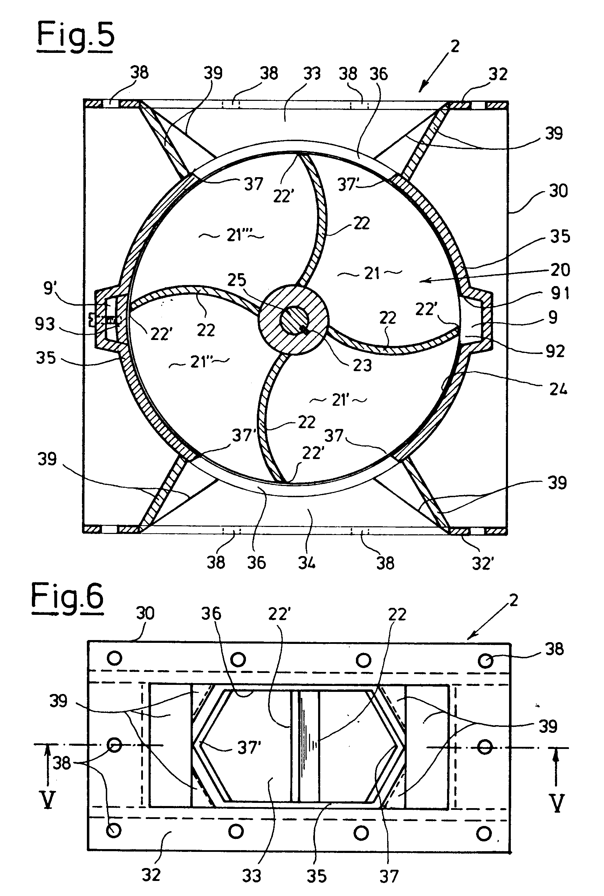

Figur 5 zeigt einen Vertikalschnitt durch die Zellenradschleuse 2, die im wesentlichen aus ihrem Gehäuse 30 sowie dem Zellenrad 20 besteht. Das Gehäuse 30 weist im Schnitt eine etwa quadratische Form mit einem oberen Flansch 32 und einem unteren Flansch 32' auf. Zur lösbaren Verbindung des Gehäuses 30 mit der Verteilerkammer 6 bzw. dem Injektionskörper 4 der Vorrichtung sind in den Flanschen mehrere Bohrungen 38 zur Durchführung von Schrauben angeordnet. Im Inneren des Gehäuses 30 befindet sich ein hohlzylinderförmiger Innenring 35, der das Zellenrad 20 unter Ausbildung eines möglichst geringen Spaltraumes umgibt. Oben und unten weist die Schleuse 2 eine Einlauf 33 bzw. einen Auslauf 34 auf, welche jeweils durch Leitbleche 39 begrenzt sind, die zwischen den Flanschen 32 und 32' sowie dem Innenring 35 angeordnet sind.

Das Zellenrad 20 besitzt einen Zellenradkern 23, von welchem die vier Flügel 22 nach außen abgehen. In Drehrichtung gesehen sind die Flügel 22 nach vorn gebogen. Den seitlichen Abschluß des Zellenrades 20 bilden kreisscheibenförmige Seitenscheiben, von denen in der Figur 4 die hintere Scheibe 24 erkennbar ist. Durch die Scheiben 24 sowie die Flügel 22 werden vier gleichgroße Zellen 21 zur Aufnahme und Dosierung des Flüssigdüngers gebildet. Zur Zerkleinerung von in diesem beförderten Feststoffen sind einerseits die Öffnungsumrandungen 36 von Einlauf 33 und Auslauf 34 im Bereich des Innenrings 35 und andererseits die Enden der Flügel 22 als Schneidkanten 37 und 37' bzw. 22' ausgebildet. Hierdurch können mitgeschwemmte Feststoffe, z. B. faserige Pflanzenreste, nach Art einer Schere zerkleinert werden und so problemlos durch die Schleuse hindurchgelangen. Aufgrund des kleinen Spaltraumes zwischen den Flügelenden 22' und dem Innenring 35 ist die Schleuse 2 bei Stillstand des Zellenrades 20 praktisch flüssigkeitsdicht, so daß bei nicht bewegter Vorrichtung auch keine Gülle ausgebracht wird.

Wie aus der Figur weiter ersichtlich ist, ist das Gehäuse 30 sowohl zu einer horizontalen als auch einer vertikalen Mittelebene spiegelsymmetrisch aufgebaut. Hierdurch wird erreicht, daß das Gehäuse bei unveränderter Zellenradposition in vier verschiedenen Lagen eingebaut werden kann, so daß einmal die Kanten 37 und 37' am Innenring 35 ihre Positionen vertauschen und daß andererseits Einlauf 33 und Auslauf 34 vertauscht werden. So werden alle vier Schneidkanten 37 und 37' am Innenring 35 im Laufe der Betriebszeit gleichmäßig beansprucht.

Zur Verlängerung der erzielbaren Standzeit können sowohl die Enden 22' der Flügel 22 als auch die Schneidkanten 37 und 37' am Innenring 35 mit Hartmetalleinlagen bestückt sein. Zum Antrieb des Zellenrades 20 dient die zentral durch den Zellenradkern 23 verlaufende, mit diesem kraftschlüssig verbundene Antriebsachse 25.

Zur Erleichterung und Beschleunigung des Befüllens und Entleerens der Zellen 21 des Zellenrades 20 kann zusätzlich zu den bereits bei Figur 1 und 2 beschriebenen Entlüftungseinrichtungen der Verteilerkammer 6 an den Zellenradschleusen 2 jeweils noch eine gesonderte Be-bzw. Entlüftungseinrichtung angeordnet sein. Diese wäre dann so auszugestalten, daß sie einerseits die von dem durch den Einlauf 33 einströmenden Flüssigdünger aus der oberen Kammer 21 verdrängte Luft entweichen läßt, und daß sie andererseits Luft in die sich entleerende bzw. entleerte nachfolgende Kammer 21' anstelle des Flüssigdüngers einläßt. Eine mögliche Ausführungsform dieser zusätzlichen Be- und Entlüftungseinrichtung ist in der Figur 5 unter der Bezugsziffer 9 bzw. 9' gezeigt. Sie besteht aus einem Überströmkanal 9 bzw. 9', der durch eine Ausstülpung des Innenrings 35 nach außen gebildet ist. Dabei ist der Überströmkanal 9 etwa mittig zwischen dem Einlaß 33 und dem Auslaß 34 der Schleuse 2 angeordnet. Wie aus der Figur 5 ersichtlich ist, bildet der Überströmkanal 9 vorübergehend, nämlich während des Vorbeistreichens des Flügelendes 22' des Flügels 22 am Kanal 9 eine Strömungsverbindung zwischen der zu befüllenden Kammer 21 und der nächstfolgenden, sich entleerenden bzw. entleerten Kammer 21'. Hierdurch kann die von dem in die Kammer 21 einströmenden Flüssigdünger verdrängte Luft durch den Überströmkanal 9 in die Kammer 21' strömen, wodurch eine rasche Füllung der Kammer 21 und eine - falls noch nicht erfolgt - beschleunigte Entleerung der Kammer 21' erreicht wird. Da die Flügel 22 nur während relativ kurzer Zeitspannen in den Bereich des Überströmkanals 9 gelangen, können durch diesen nennenswerte Güllemengen nicht abfließen.

Da ein Überströmkanal seinen Sinn nur an der Seite des Innenrings 35 hat, an welcher die Flügel aufwärts laufen, und weil zugleich die Schleuse 2 symmetrisch ausgeführt sein soll, ist aus der gegenüberliegenden Seite ebenfalls ein Überströmkanal 9', jedoch mit einem Deckel 93 verschlossen, angeordnet. Wird die Schleuse in einer Position eingebaut, in der der Überströmkanal 9' an der

Seite liegt, an welcher die Zellenradflügel 22 aufwärts laufen, ist der Deckel 93 einfach auf die andere Seite zu versetzen, um den Überströmkanal 9 zu verschließen.

Figur 6 schließlich zeigt einen Blick auf die Einlaufseite der Zellenradschleuse 2. In der Mitte ist die Einlauföffnung 33 erkennbar, die durch eine Öffnung in dem Innenring 35 gebildet wird, wobei die Öffnungsumrandung 36 im Auflaufbereich der Kanten 22′ der Zellenradflügel 22 als Schneidkante 37 bzw. 37′ ausgebildet ist. Hieran schließen sich seitlich die Leitbleche 39 an. Außenseitig sind die genannten Teile von dem umlaufenden Flansch 32 des Gehäuses 30 umgeben. In dem Flansch 32 sind wiederum die Bohrungen 38 erkennbar, die zur Verbindungen des Gehäuses 30 mit der Kammer 6 dienen. Da das Gehäuse 30 völlig symmetrisch aufgebaut ist, würde ein Blick auf die Auslaufseite 34 der Zellenradschleuse 2 mit der Darstellung in Figur 6 identisch sein. Schließlich ist in Figur 6 noch die Schnittlinie V - V eingezeichnet, welche die Lage des in Figur 5 dargestellten Vertikalschnittes durch die Zellenradschleuse 2 angibt.

Außer den dargestellten Ausführungsformen sind natürlich auch noch andere Gestaltungen der erfindungsgemäßen Vorrichtung 1 denkbar, wie z. B. als Anhänger mit einer oder auch zwei Achsen. Weiterhin ist denkbar, die Achse 51 verschwenkbar zu gestalten, so daß die Eindringtiefe der Injektionskörper 4 einstellbar ist. Ergänzend kann die Vorrichtung 1 auch einen an sich bekannten, nachlaufenden Walzenkörper je Injektionskörper 4 aufweisen, der für einen Wiederverschluß der aufgeschnittenen Bodenoberfläche 81 sorgt, wenn dies nicht - wie bei dem Ausführungsbeispiel nach Figur 4 - ohnehin durch nachlaufende Räder 5 geschieht.

**Patentansprüche**

1. Injektionsvorrichtung zur kontinuierlichen Einbringung von pumpfähiger Flüssigkeit in den Boden, wobei die Vorrichtung (1) an einen Traktor oder ein Tankfahrzeug anbaubar ist,
   - mit mehreren parallel zueinander angeordneten, in den Boden einführbaren und durch diesen in horizontaler Richtung hindurchbewegbaren, Flüssigkeit führenden und abgebenden Injektionskörpern (4, 4', 4''),
   - mit Mitteln (69) zur Zuführung der Flüssigkeit aus einem Tank und zu deren Verteilung auf die Injektionskörper (4, 4', 4'') und
   - mit pro Injektionskörper (4, 4', 4'') je einer weg abhängig betätigten, zwischen der Flüssigkeits-Zuführung (69) und den Injektionskörpern (4, 4', 4'') angeordneten, die Flüssigkeit dosierenden Dosierschleuse (2, 2', 2'') mit einem obenliegenden Einlauf (33) und einem untenliegenden Auslauf (34),
dadurch gekennzeichnet,
   - daß zur kontinuierlichen Einbringung von pumpfähigem Flüssigdünger, insbesondere Flüssigmist oder Gülle, die Dosierschleusen (2, 2', 2'') als Zellenradschleusen (2, 2', 2'') ausgebildet sind,
   - daß oberhalb der Zellenradschleusen (2, 2', 2'') eine die Einläufe (33) der Zellenradschleusen (2, 2', 2'') verbindende, die Flüssigkeit aus dem Tank kommend auf die Schleusen (2, 2', 2'') verteilende Verteilerkammer (6) mit wenigstens einer flüssigkeitsdichten, selbsttätigen Entlüftungseinrichtung (66, 67, 68) angeordnet ist und
   - daß die Zellenradschleusen (2, 2' , 2'') jeweils unmittelbar unter der gemeinsamen Verteilerkammer (6) angeordnet sind.

2. Injektionsvorrichtung nach Anspruch 1, dadurch gekennzeichnet, daß die Zellenradschleusen (2, 2', 2") auf einer gemeinsamen Antriebsachse (25) angeordnet sind.

3. Injektionsvorrichtung nach Anspruch 2, dadurch gekennzeichnet, daß die Antriebsachse (25) aus mehreren, lösbar miteinander verbundenen, jeweils einer Schleuse (2, 2', 2") zugeordneten Achsteilstücken (26, 26', 26") besteht.

4. Injektionsvorrichtung nach Anspruchen 1, dadurch gekennzeichnet, daß jede Zellenradschleuse (2, 2', 2") über eine eigene Antriebsachse (25') verfügt.

5. Injektionsvorrichtung nach einem der Ansprüche 2 bis 4, dadurch gekennzeichnet, daß die Zellenradschleusen (2, 2', 2") durch ein oder mehrere von wenigstens einer Achse (25, 51) getragene, auf der Bodenoberfläche (81) ablaufende Räder (5) in Drehung versetzbar sind.

6. Injektionsvorrichtung nach Anspruch 5, dadurch gekennzeichnet, daß endseitig auf der gemeinsamen Antriebsachse (25) der Schleusen (2, 2', 2") je eines der Räder (5) angeordnet ist, wobei wenigstens eines der Räder (5) kraftschlüssig mit der Achse (25) verbunden ist.

7. Injektionsvorrichtung nach Anspruch 5, dadurch gekennzeichnet, daß die Schleusen-Antriebsachse(n) (25, 25') über ein oder mehrere Kettengetriebe, jeweils bestehend aus zwei oder mehreren Kettenritzeln (28, 53) und einer Kette (54) von einem oder mehreren Rädern (5) aus antreibbar sind.

8. Injektionsvorrichtung nach Anspruch 5 oder 7, dadurch gekennzeichnet, daß die Radachse(n) (51) mit ihren Rädern (5) mittels wenigstens je einer Schwinge (55) um die Schleusen-Antriebsachse(n) (25) herum verschwenkbar ist/sind.

9. Injektionsvorrichtung nach einem der Ansprüche 1 bis 8, gekennzeichnet durch zu einer Traktor-Dreipunkt-Aufhängung kompatible Anschlaglaschen (11, 12), einen zu einer Kupplung eines Tankanhängers passenden Kupplungszapfen (13) und eine wenigstens an ihren Enden in der Vorrichtung (1) gelagerte, in ihrer Länge im wesentlichen dem Abstand zwischen dem Kupplungszapfen (13) der Vorrichtung (1) und einem entsprechenden Kupplungszapfen des Traktors entsprechende, in Längsrichtung etwa mittig durch die Vorrichtung (1) hindurchgeführte Zapfwelle (7).

10. Injektionsvorrichtung nach einem der Ansprüche 1 bis 9, dadurch gekennzeichnet, daß die äußeren Enden der die Zellen (21) der Zellenradschleusen (2, 2', 2") bildenden Flügel (22) einerseits und die Umrandungen (36) der Einläufe (33) und der Ausläufe (34) andererseits als miteinanderwirkende Schneidkanten (22; 37, 37') ausgebildet sind.

11. Injektionsvorrichtung nach einem der Ansprüche 1 bis 10, dadurch gekennzeichnet, daß die Zellenradschleusen (2, 2', 2") jeweils ein Gehäuse (30) aufweisen, in welchem der Einlauf (33) und der Auslauf (34) in sich und untereinander spiegelsymmetrische Öffnungen sind, und welches zwei in sich und untereinander spiegelsymmetrische Flanschflächen (32, 32') zur Anordnung des Gehäuses (30) zwischen der Verteilerkammer (6) und dem Injektionskörper (4) sowie Mittel zur lösbaren Verbindung mit diesen aufweist.

12. Injektionsvorrichtung nach einem der Ansprüche 1 bis 11, gekennzeichnet durch wenigstens je einen in den Zellenradschleusen (2, 2', 2") vorhandenen Luft-Überströmkanal (9), welcher derart in das Innere des Schleusengehäuses (30, 35) mündet, daß der Kanal (9) während des Füllens einer Schleusenzelle (21) zumindest zeitweise eine luftdurchlässige Strömungsverbindung zwischen der zu füllenden Zelle (21) und der nächstfolgenden, entleerten Zelle (21') bildet.

## Claims

1. An injection device for continuous feeding of pumpable liquid into the ground, the device (1) being capable of being built on to a tractor or a tanker vehicle,
   - comprising several mutually parallel injection bodies (4, 4', 4") which can be inserted into the ground, which can be moved therethrough in the horizontal direction and which convey and deliver liquid,
   - comprising means (69) for supplying the liquid from a tank and distributing it to the injection bodies (4, 4', 4") and
   - comprising a metering sluice (2, 2', 2") per injection body (4, 4', 4"), the metering sluices (2, 2', 2") being path-dependently operated, arranged between the liquid supply (69) and the injection bodies (4, 4', 4"), metering the liquid and comprising an upper inlet (33) and lower outlet (34),
   characterized in that
   - for continuous feeding of pumpable liquid fertilizer, especially liquid manure, the metering sluices (2, 2', 2") are constructed as cellular wheel sluices (2, 2', 2"),
   - above the cellular wheel sluices (2, 2', 2") there is arranged a distributor chamber (6) with at least one liquid-tight automatic deaerator (66, 67, 68), said distributor chamber (6) connecting the inlets (33) of the cellular wheel sluices (2, 2', 2") and distributing the liquid coming from the tank to the sluices (2, 2', 2"), and
   - the cellular wheel sluices (2, 2', 2") are arranged directly below the common distributor chamber (6).

2. An injection device according to claim 1, characterized in that the cellular wheel sluices (2, 2', 2") are arranged on a common drive shaft (25).

3. An injection device according to claim 2, characterized in that the drive shaft (25) consists of several, releasably interconnected shaft portions (26, 26', 26") each associated with a sluice (2 2', 2").

4. An injection device according to claim 1, characterized in that each cellular wheel sluice (2, 2', 2") has its own drive shaft (25') at its disposal.

5. An injection device according to any one of claims 2 to 4, characterized in that the cellular wheel sluices (2, 2', 2") can be set in rotation by one or more wheels (5) carried by at least one shaft (25, 51) and running on the ground surface (81).

6. An injection device according to claim 5, characterized in that one of the wheels (5) is arranged at each end of the common drive shaft (25) of the sluices (2, 2', 2"), at least one of the wheels (5) being frictionally connected with the shaft (25).

7. An injection device according to claim 5, characterized in that the sluice drive shaft(s) (25, 25') is/are drivable via one or more chain gears, each consisting of two or more chain pinions (28, 53) and a chain (54) of one or more wheels (5).

8. An injection device according to claim 5 or claim 7, characterized in that the wheel shaft(s) (51) can be swivelled with its/their wheels (5) about the sluice drive shaft(s) (25) by means of at least one rocker (55).

9. An injection device according to any one of claims 1 to 8, characterized by fixing brackets (11, 12) compatible with a tractor three-point suspension, a coupling pin (13) conformed to the coupling of a tank trailer and a power take-off shaft (7) accommodated at least at its ends in the device (1), corresponding in length substantially to the distance between the coupling pin (13) of the device (1) and corresponding coupling pin on the tractor and passing through the device (1) approximately centrally in the longitudinal direction.

10. An injection device according to any one of claims 1 to 9, characterized in that the outer ends of the blades (22) forming the cells (21) of the cellular wheel sluices (2, 2', 2") on the one hand and the edges (36) of the inlets (33) and the outlets (34) on the other hand are constructed as interacting cutting edges (22; 37, 37').

11. An injection device according to any one of claims 1 to 10, characterized in that the cellular wheel sluices (2, 2', 2") each comprise a housing (30), in which the inlet (33) and the outlet (34) are mirror-symmetrical openings in themselves and amongst each other and which comprises two flange surfaces (32, 32'), which are mirror-symmetrical in themselves and amongst each other, for the arrangement of the housing (30) between the distributor chamber (6) and the injection body (4) as well as means for the releasable connection therewith.

12. An injection device according to any one of claims 1 to 11, characterized by at least one air overflow channel (9) present in the cellular wheel sluices (2, 2', 2"), which channel (9) opens into the inside of the sluice housing (30, 35) in such a way that during filling of a sluice cell (21) the channel (9) forms at least temporarily an air-permeable flow connection between the cell (21) to be filled and the subsequent, emptied cell (21').

## Revendications

1. Dispositif pour injecter en continu un liquide pouvant être pompé dans le sol, le dispositif (1) pouvant être monté sur un tracteur ou un véhicule citerne,
   - comprenant plusieurs corps d'injection (4, 4', 4") qui sont disposés parallèlement les uns aux autres, peuvent être introduits dans le sol et y être déplacés en direction horizontale et guident et délivrent du liquide,
   - des moyens (69) pour amener le liquide en provenance d'une cuve et le distribuer sur les corps d'injection (4, 4', 4"), et
   - par corps d'injection (4, 4', 4") un sas de dosage (2, 2', 2") actionné en fonction du parcours, disposé entre l'amenée de liquide (69) et les corps d'injection (4, 4', 4") , dosant le liquide et comprenant une entrée (33) située en haut et une sortie (34) située en bas,
   caractérisé en ce que
   - pour injecter en continu un engrais liquide, en particulier du fumier liquide ou du lisier, les sas de dosage (2, 2', 2") sont réalisés sous forme de sas à roue à augets (2, 2', 2"),
   - qu'une chambre de distribution (6) qui relie les entrées (33) des sas à roue à augets (2, 2', 2"), répartit le liquide en provenance de la cuve sur les sas (2, 2', 2") et comprend au moins un dispositif d'aération automatique étanche aux liquides (66, 67, 68), est disposée au-dessus des sas à roue à augets (2, 2', 2"), et
   - que les sas à roue à augets (2, 2', 2") sont disposés chacun directement sous la chambre de distribution commune (6).

2. Dispositif d'injection selon la revendication 1, caractérisé en ce que les sas à roue à augets (2, 2', 2") sont disposés sur un arbre de commande commun (25).

3. Dispositif d'injection selon la revendication 2, caractérisé en ce que l'arbre de commande (25) est composé de plusieurs bouts d'arbre (26, 26', 26") reliés entre eux de manière amovible et associés chacun à un sas (2, 2', 2").

4. Dispositif d'injection selon la revendication 1, caractérisé en ce que chaque sas à roue à augets (2, 2', 2") dispose d'un arbre de commande (25) propre.

5. Dispositif d'injection selon l'une des revendications 2 à 4, caractérisé en ce que les sas à roue à augets (2, 2', 2") peuvent être entraînés en rotation par une ou plusieurs roues (5) portées par au moins un essieu (25: 51) et circulant sur la surface du sol (81).

6. Dispositif d'injection selon la revendication 5, caractérisé en ce que chacune des roues (5) est disposée côté extrémité sur l'arbre de commande commun (25) des sas (2, 2', 2"), au moins l'une des roues (5) étant reliée par frottement à l'arbre (25).

7. Dispositif d'injection selon la revendication 5, caractérisé en ce que l'arbre (les arbres) de commande de sas (25, 25') peut (peuvent) être entraîné(s) par un ou plusieurs engrenages à chaîne composés chacun de deux pignons (28, 53) ou plus et d'une chaîne (54), à partir d'une ou plusieurs roues (5).

8. Dispositif d'injection selon la revendication 5 ou 7, caractérisé en ce que l'essieu (les essieux) (51) peut (peuvent) pivoter avec leurs roues (5) au moyen d'au moins une bielle oscillante (55) autour de l'arbre (des arbres) de commande de sas (25).

9. Dispositif d'injection selon l'une des revendications 1 à 8, caractérisé par des brides de butée (11, 12) compatibles avec une suspension à trois points de tracteur, un pivot d'accouplement (13) s'adaptant sur un accouplement d'une citerne remorquée et une prise de force (7) montée au moins à ses extrémités dans le dispositif (1), correspondant de par sa longueur essentiellement à l'écartement entre le pivot d'accouplement (13) du dispositif (1) et un pivot d'accouplement correspondant du tracteur et guidée en direction longitudinale à peu près centralement dans le dispositif (1).

10. Dispositif d'injection selon l'une des revendications 1 à 9, caractérisé en ce que les extrémités extérieures des ailettes (22) formant les auges (21) des sas à roue à augets (2, 2', 2") d'une part et les bords (36) des entrées (33) et des sorties (34) d'autre part sont réalisés sous forme de tranchants (22 ; 37, 37') coopérant entre eux.

11. Dispositif d'injection selon l'une des revendications 1 à 10, caractérisé en ce que les ses à roue à augets (2, 2', 2") présentent chacun un boîtier (30) dans lequel l'entrée (33) et la sortie (34) sont des ouvertures symétriques et qui présente deux surfaces de brides (32, 32') symétriques pour disposer le boîtier (30) entre la chambre de distribution (6) et le corps d'injection (4) ainsi que des moyens pour le relier de manière amovible à ces derniers.

12. Dispositif d'injection selon l'une des revendications 1 à 11, caractérisé par au moins un canal de décharge d'air (9) présent dans chacun des sas à roue à augets (2, 2', 2") qui débouche à l'intérieur du boîtier de sas (30, 35) de telle manière que le canal (9) forme pendant le remplissage d'une auge de sas (21) au moins temporairement une liaison d'écoulement laissant passer l'air entre l'auge à remplir (21) et l'auge suivante vide (21').

Fig.1

# Fig.2

Fig.3

Fig.4

## Fig.5

## Fig.6